# EUROPEAN PATENT APPLICATION

(11) **EP 1 560 128 A1**
(43) Date of publication of application: **03.08.2005**
(21) Application number: 03810667.0
(22) Date of filing: 07.11.2003
(51) Int. Cl.: G06F 17/30, G06F 17/60

(54) **INFORMATION MANAGEMENT DEVICE, INFORMATION MANAGEMENT SYSTEM, INFORMATION MANAGEMENT PROGRAM, AND RECORDING MEDIUM**

(30) Priority: 08.11.2002 JP 2002325863
(71) Applicant: SUMITOMO HEAVY INDUSTRIES, LTD., Shinagawa-ku, Tokyo 141-8686 (JP); Nec Soft, LTD., Tokyo 136-8608 (JP)
(72) Inventor: HIROSUMI, Hitoshi, Tomisato-shi, Chiba 286-0201 (JP); MORIMURA, Tatsuo, Chiba-shi, Chiba 262-0017 (JP); KITOU, Yoshiyuki c/o NEC Soft, Ltd., Koto-ku, Tokyo 136-8608 (JP)
(74) Representative: Wagner, Karl H., Dipl.-Ing.
(86) International application number: PCT/JP2003/014220
(87) International publication number: WO 2004/042612

(57) **Abstract**

It is an object of the present invention to provide an information management apparatus, an information management system, an information management program, and a recording medium, which uses know-how of the manufacture of a device to improve operation related to the device. An information management apparatus according to the present invention is a device for managing information related to a predefined device, having a basic information database configured to store basic information related to the device accumulated by the manufacturer of the device, and a user information database configured to store case information related to the device obtained by the user of the device.

## Description

### TECHNICAL FIELD

The present invention relates to technique to use a computer for the management and use of information.

### BACKGROUND ART

It is a recent problem that molding engineers working in molding plants are only poorly educated. However, as is apparent from the fact that molding engineers can be qualified as special class, first class, and second class, molding technique is full of know-how. In addition, various knowledge other than the molding technique is required in a molding site.

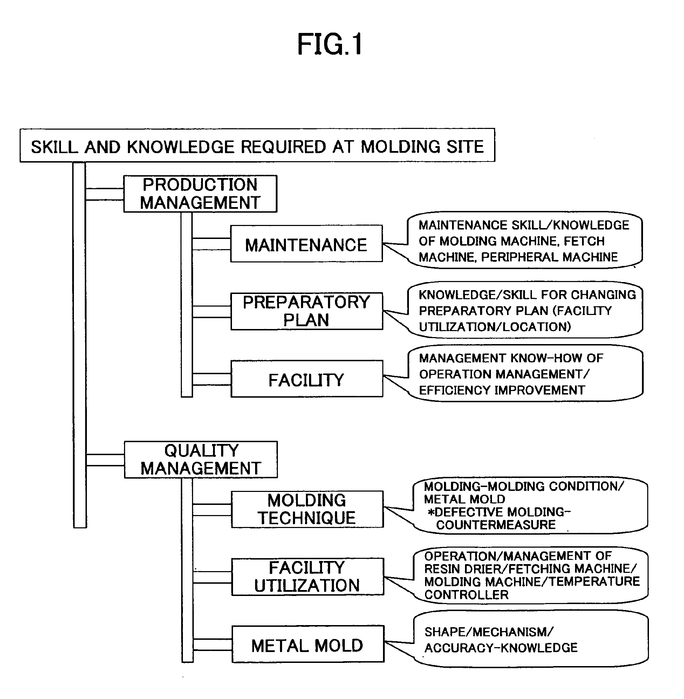

FIG. 1 is a diagram for explaining knowledge and skills required in the molding site. As shown in FIG. 1, various more knowledge is required in the molding site than it is required in operation sites of other machine tools. Such knowledge includes knowledge for production management and knowledge for quality management, for example. The production management knowledge includes: skills for maintaining a molding machine; knowledge of change in production preparatory plan; management know-how of operation management/efficiency improvement, for example. The quality management knowledge includes: knowledge related to molding technique; knowledge related to peripheral machines of an injection molding machine such as a fetch machine, an inspection machine for moldings, and a metal mold temperature adjust machine; knowledge related to metal molds, for example.

Among the above various knowledge, what is the most important is knowledge related to the molding technique for determining molding condition to mold new molding items. The molding of new molding items often causes molding defects such as cobwebbing, shortstop, and/or burr. As a result, empirical knowledge is very important for properly setting conditions related to the action of screw in a molding process, the rotative quantity of screw in a measurement process, and the temperature of metal mold, in order to produce good molds.

The modification of the metal mold as well as the modification of the molding conditions may be required for producing non-defective items. In such a case, the knowledge of experienced engineers is very helpful for determining whether the modification of the metal mold is necessary, and how the metal mold is to be modified.

Thus, it is very important that the experienced engineers educate molding engineers who lead the future molding plants. However, the experienced engineers who have high level know-how are often involved in the launch of new overseas plants, the transfer of domestic plants to overseas, and daily problem solving, and unable to spare time for the education of less experienced engineers. In addition, the number of engineers who inherit the molding technique is decreasing due to molding process being outsourced or many temporary staff being accepted in the molding plant. Under such situation, the defective ratio needs to be reduced and operation ratio needs to be improved in everyday production.

The inheritance of in-house high level know-how is one of the goals that not only the molding sites but also general corporations need to achieve. Knowledge management system is drawing attention as a tool for achieving such a goal. The knowledge management system allows an organization to manage various know-how widely distributed in-house as a database, and enables the members of the organization to easily obtain the in-house know-how that otherwise requires much effort to obtain. The knowledge management system allows the organization to inherit this information over generations as the assets of the organization.

However, it is necessary for the effective operation of knowledge management system that the substance of the database, that is, information such as know-how widely distributed in-house is managed by a system. That is, various know-how needs to be registered to the system after the introduction of the knowledge management system. This process takes a long time period before the effect of the knowledge management system is achieved. If much non-valuable information and/or incorrect information is registered, it may rather cause confusion, and makes the knowledge management system difficult to achieve effect as expected.

Now, technique for operating and maintaining a machine, for example, in a molding plant is also required for using a machine such as an injection molding machine. Thus, as for a technique in dependence on a specific machine, the manufacturer that manufactures and sells the machine generally has high quality know-how accumulated.

Not only the techniques in dependence on a specific machine but also fundamental knowledge related to molding described in materials of molding technique seminar, for example, is information that the molding machine manufacturer can obtain. Additionally, knowledge acquired by an engineer of the manufacturer who, when a molding machine installed in a customer molding site fails, has been sent to the customer molding site for trouble shooting is also retained by the molding machine manufacturer.

Therefore, the use of know-how accumulated by the machine manufacture allows users of the machine to operate the machine very efficiently, and the know-how can be expected to be of very high quality.

### DISCLOSURE OF INVENTION

It is a general object of the present invention to provide an information management apparatus, an information management system, an information management program, and a recording medium storing the information management program in which the above-mentioned problems are eliminated. A more specific object of the present invention is to provide an information management apparatus, an information management system, an information management program, and a recording medium storing the information management program that allows the user to use the know-how accumulated by the manufacturer of the machine to make the operation related to the machine efficient.

At least one of the above objects is achieved by means of the following apparatus. According to the present invention, an information management apparatus for managing information related to a predefined device, includes a basic information database configured to store basic information related to the device accumulated by the manufacturer of the device and a user information database configured to store case information related to the device obtained by the user of the device.

When using information accumulated by a manufacturer of a machine, the information stored in the basic information database, a user can use information of high quality based on evaluation information managed by the user information database, which results in the use of high quality know-how of the manufacturer and the improvement in efficiency of operation related to the machine.

The present invention may be embodied as an information management system including the above information management apparatus, an information management program that causes a computer to perform a method of managing information of the information management apparatus, and/or a recording medium in which the information management program is stored.

### BRIEF DESCRIPTION OF DRAWINGS

FIG. 1 is a diagram for explaining the knowledge and skills required at molding sites;
FIG. 2 is a schematic diagram showing a knowledge management system according to an embodiment of the present invention;
FIG. 3 is a block diagram showing the hardware configuration of a knowledge server according to an embodiment of the present invention;
FIG. 4 is a schematic diagram showing the functions of a knowledge server according to an embodiment of the present invention;
FIG. 5 is a schematic diagram showing an injection molding machine;
FIG. 6 is a schematic diagram showing an exemplary web site of a knowledge management system;
FIG. 7 is a schematic diagram showing an exemplary page for searching external knowledge;
FIG. 8 is a sequence diagram for explaining the search of external knowledge;
FIG. 9 is a schematic diagram showing an exemplary page showing search result;
FIG. 10 is a schematic diagram showing an exemplary page showing detailed information;
FIG. 11 is a schematic diagram showing an exemplary page for inputting evaluation information;
FIG. 12 is a schematic diagram showing an exemplary page for registering a new document;
FIG. 13 is a sequence diagram for explaining the registration of a new document;
FIG. 14 is a schematic diagram showing an exemplary page for searching entire text;
FIG. 15 is a sequence diagram for explaining the search of entire text; and
FIG. 16 is a schematic diagram showing an exemplary page showing the result of entire text search.

### BEST MODE FOR CARRYING OUT THE INVENTION

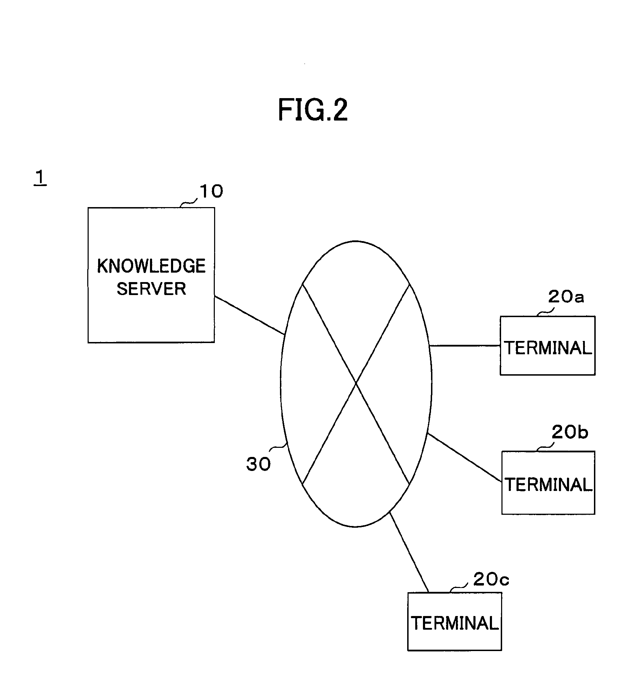

Embodiments of the present invention are described below with reference to the drawings. FIG. 2 is a schematic diagram showing an exemplary configuration of a knowledge management system according to an embodiment of the present invention. A knowledge management system 1 shown in FIG. 2 may be operated by a user company of injection molding machines. The knowledge management system 1 includes a knowledge server 10 and terminals 20a, 20b, and 20c (hereinafter may be collectively referred to as "terminal 20") connected to each other via a network such as the Internet and an intra net.

The knowledge server 10 is an information management apparatus for managing information related to the injection molding machines used by the user company. The knowledge server 10 provides information to the terminal 20, and stores and manages new information received from the terminal 20.

The terminal 20 may be any suitable terminal having communication function such as a personal computer (PC), a personal digital assistant (PDA), and a cellular phone. A user can use the terminal 20 for browsing information related to an injection molding machine managed by the knowledge server 10 and for registering new information to the knowledge server 10.

A display unit and an input unit built in an injection molding machine may be used as the terminal 20.

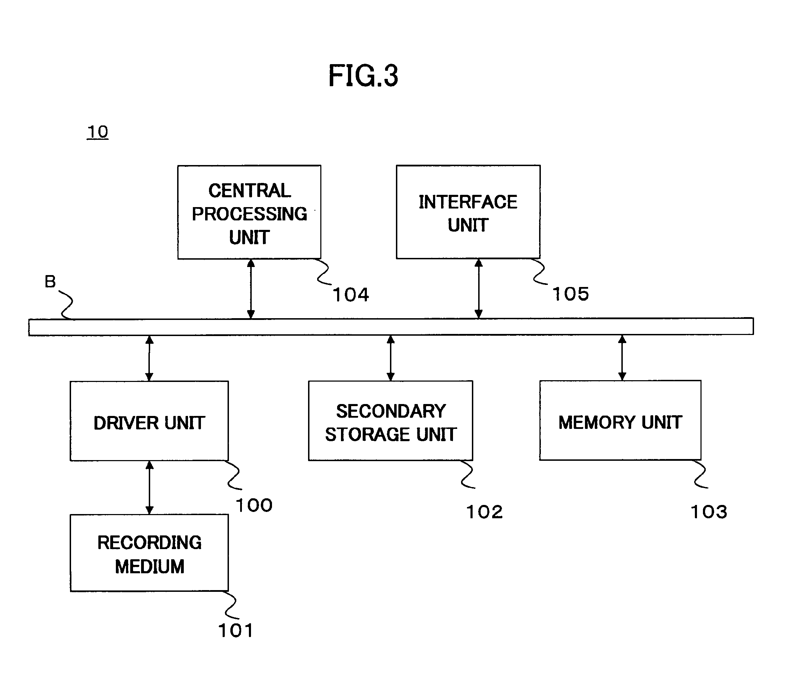

The knowledge server 10 shown in FIG. 2 is described below in detail. FIG. 3 is a block diagram showing the hardware configuration of the knowledge server according to an embodiment of the present invention. The knowledge server 10 shown in FIG. 3 includes a drive unit 100, a secondary storage unit 102, a memory unit 103, a central processing unit 104, and an interface unit 105, each connected to a bus B.

The interface unit 105 may include a modem and/or a router, for example, and is used to connect the knowledge server 10 to the network 30 as shown in FIG. 2.

The knowledge server 10 may use a knowledge server program provided by means of a recording medium 101 such as a CD-ROM. The recording medium 101 storing the knowledge server program is set to the drive unit 100. The knowledge server program is loaded and installed from the recording medium 101 to the secondary storage unit 102 via the driver unit 100.

The secondary storage unit 102 stores the installed knowledge program as well as files and data needed by the knowledge server 10. In response to receipt of an instruction for activating the knowledge server program upon the activation of the knowledge server 10, for example, the knowledge server program is read from the secondary storage unit 102 and stored to the memory unit 103. The central processing unit 104 performs functions related to the knowledge server 10 in accordance with the knowledge server program stored in the memory unit 103.

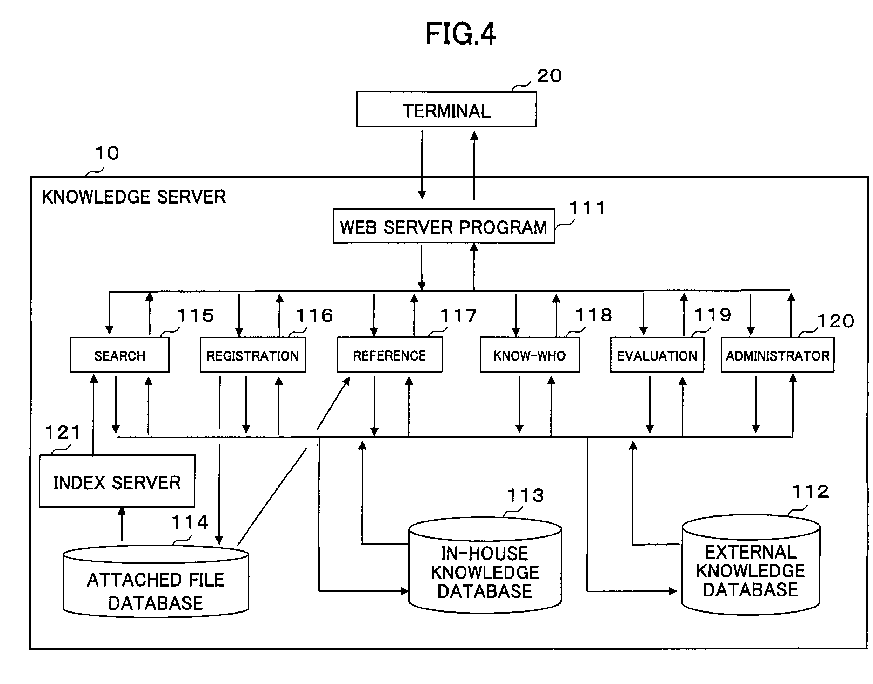

The functions of the knowledge server is described below. FIG. 4 is a schematic diagram showing the functions of the knowledge server according to an embodiment of the present invention. The knowledge server 10 shown in FIG. 4 includes a web server program 111, an external knowledge database 112, an in-house knowledge database 113, an attached file database 114, a search function unit 115, a registration function unit 116, a reference function unit 117, a know-who function unit 118, an evaluation function unit 119, an administrator function unit 120, and an index server 121.

The web server program 111 corresponds to a computer program generally called HTTPd (HTTP daemon), and causes the knowledge server 10 function as a web server. That is, the knowledge server 10 uses the web page to make the functions of the knowledge server 10 available to the terminal 20. According to the above arrangements, the terminal 20 does not require special software for receiving the service of the knowledge server 10 as long as the terminal 20 has a general-purpose browser installed.

The external knowledge database 112 is a unchangeable database that stores information related to the injection molding machines used by the user company. It is noted that the external knowledge database 112 is not a database constructed by the user company by accumulating its own know-how, but a database in which basic information related to the injection molding machines accumulated by the manufacturer is provided. Thus, the user company can use the information stored in the external knowledge database 112 as soon as the user company starts using the knowledge management system 1.

The information related to injection molding machines stored in the external knowledge database 112 may includes not only information related to the product specifications, operation, and procedures of the injection molding machines, but also information related to the following: maintenance of injection molding machines; preparatory plan change; operations management such as know-how of operation and efficiency management; molding technique; peripheral machines injection molding machines such as fetching machines, inspection machines for moldings, and metal mold temperature controller; metal molds; countermeasures to molding defects; various cases accumulated by the manufacturer, for example. Particularly, information related to injection molding machine for dissolving basic defects such as "cushion defects", "cycle anomaly", "filling peak pressure anomaly", "motor temperature anomaly", "ball screw temperature anomaly", for example, are accumulated. According to the above arrangements, the user can use the information stored in the external knowledge database 11 as primary information (basic information) to find out countermeasures and/or tips for dissolving any defects caused by the injection molding machines.

Since the user is not permitted to change the external knowledge database 112 provided by the manufacturer, the information stored in the external knowledge database 112 is prevented from being changed accidentally. A general database management system has function for restricting user access, which can be used to prevent the user from changing the contents of the external knowledge database 112. Alternatively and/or additionally, if no means for changing the external database 112 is provided to user interface, the user can be prevented from changing the contents of the external knowledge database 112.

The in-house knowledge database 113 is a database for storing case information including cases and know-how accumulated by the user itself and secondary information such as the evaluation of information stored in the external knowledge database 112 and the in-house knowledge database 113 itself. The above evaluation means subjective evaluation made by the user on the information accumulated in the external knowledge database 112 and the in-house knowledge database 113 including the effects resulting from the information.

The case information described above includes know-how acquired at the molding sites, and application information related to the machines accumulated by the user itself such as: information related to maintenance of the injection molding machines accumulated by the user itself; information related to preparatory plan changes in manufacturing process accumulated by the user itself; information related to molding techniques accumulated by the user itself; information related to the peripheral equipment of the injection molding machines accumulated by the user itself; and information related to function for dissolving failure such as molding defects.

Therefore, the in-house knowledge database 113 is a database in which information is accumulated as the knowledge management system 1 is operated, and corresponds to a database of a so-called knowledge management system widely used. Know-how of the user itself is accumulated in the in-house database 113.

The attached file database 114 is a database for storing document files, for example, that need to be associated with information registered in the in-house knowledge database 113.

The search function unit 115 is a unit for searching information from the external knowledge database 112 and/or the in-house knowledge database 113 based on a retrieval condition transmitted from the terminal 20.

The registration function unit 116 is a unit for registering information transmitted from the terminal 20 to the in-house knowledge database 113. When the terminal 20 transmits a document file, for example, to be managed in association with the information, the registration function unit 116 registers the document file to the attached file database 114.

The reference function unit 117 is a unit for retrieving a document file, for example, that the terminal 20 has requested for reference from the attached file database 114, and present the retrieved attached file to the terminal 20.

The know-who function unit 118 is a unit for searching and registering individuals who own know-how and knowledge. It means that the in-house knowledge database 113 can manage not only information itself but also locations (location information) where the information is available, the location including individuals who own the information. The know-who function unit 118 can search and register the location information.

The evaluation function unit 119 is a unit for searching and registering evaluation information stored in the in-house knowledge database 113.

The administrator function unit 120 is a unit for maintaining function of the knowledge server to which only the administrator of the knowledge server can use. For example, the administrator function unit 120 includes function for editing the layout of user interface screen and function for managing users.

The index server 121 manages association between information managed by the in-house knowledge database 113 and the external knowledge database 114 and document files, for example, managed by the attached file database 114.

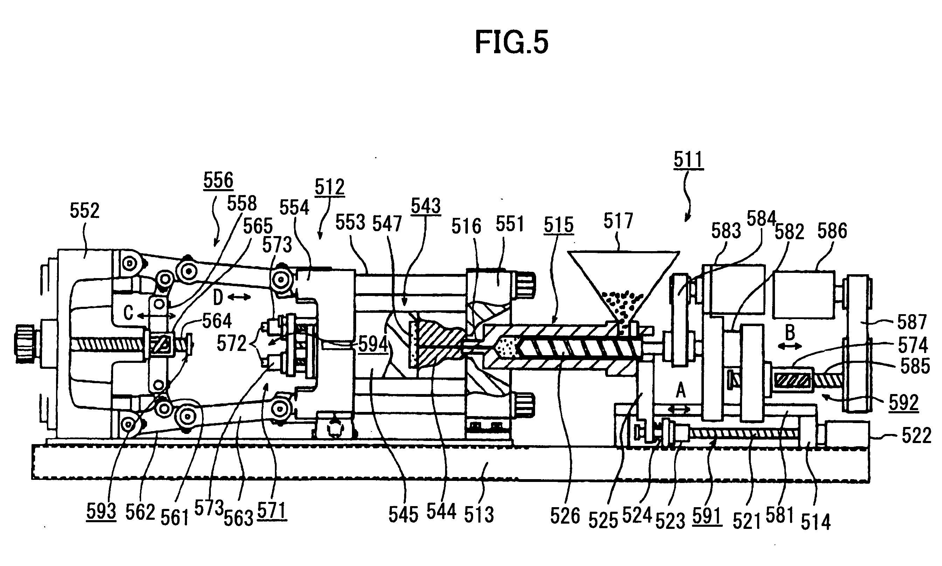

The exemplary structure of an injection molding machine that the user company purchases and uses from the manufacturer is described below. FIG. 5 is a schematic diagram showing an exemplary injection molding machine.

In FIG. 5, 511 denotes a injection unit; 512 denotes a clamping unit opposite the injection unit 511; 513 denotes a molding machine frame supporting the injection unit 511 and the clamping unit 512; 514 is an injection unit frame that supports the injection unit frame and is supported by the molding machine frame 513; 581 denotes a guide provided in the length directions of the injection unit frame 514; 543 denotes a metal mold unit including a fixed metal mold 544 and a movable metal unit 545.

A ball screw shaft 521 is supported by the injection unit frame 514, the ball screw shaft 521 being rotatable, and an end of the ball screw shaft 521 is connected to a motor 522. The ball screw shaft 521 and a ball screw nut 523 are engaged threadedly. The ball screw nut 523 and the injection unit 511 are connected to each other via a spring 524 and a bracket 525. According to the above arrangements, the rotation of the motor 522 is converted into linear motion by the combination of the ball screw shaft 521 and the ball screw nut 523, that is, a screw unit 591, and the linear motion is transferred to the bracket 525. The bracket 525 is moved along a guide 581 in the directions indicated by an arrow A, and the injection unit 511 moves back and forth.

A heating cylinder 515 is fixed on the bracket 525, the heating cylinder 515 facing forward (to the left in FIG. 5), and an injection nozzle 516 is provided at the front end (at the left end in FIG. 5) of the heating cylinder 515. In addition, a hopper 517 is provided on the heating cylinder 515. A screw 526 is provided in the interior of the heating cylinder 515, and is movable back and forth (in the right and left directions in FIG. 5) and rotatable. The back end of the screw 526 (the right end in FIG. 5) is supported by a supporting member 582.

A first servo motor 583 is attached to the supporting member 582 such that the rotation of the first servo motor 583 is transferred to the screw 526 via a timing belt 584.

A ball screw shaft 585 is supported by the injection unit frame 514 in parallel with the screw 526, the ball screw shaft 585 being rotatable, and is connected to a second servo motor 586 via a timing belt 587. The front end of the ball screw shaft 585 is engaged threadedly with a ball screw nut 574 fixed to the supporting member 582. According to the above arrangements, when the second servo motor 586 is activated, the rotation of the second servo motor 586 is converted into linear motion by the combination of the ball screw shaft 585 and the ball screw nut 574, that is, a screw unit 592, and the linear motion is transferred to the supporting member 582.

The operation of the injection unit 511 is described below.

In a measurement step, the first servo motor 583 is activated to rotate the screw 526 via the timing belt 584 until the screw 526 moves backward to a predetermined position (to the right direction in FIG. 5). In this step, resin is provided from the hopper 517, and is heated and melted in the heating cylinder 515. As the screw 526 moves backward, the melted resin is retained in front of the screw 526.

In the next injection step, an injection nozzle 516 is pressed to a fixed metal mold 544, and the second servo motor 586 is activated so that the ball screw shaft 585 is rotated via the timing belt 587. During this step, the supporting member 582 is moved as the rotation of the ball screw shaft 585, and moves forward the screw 526 (in the left direction in FIG. 5). The melted resin retained in front of the screw 526 is injected in a cavity space 547 formed between the fixed metal mold 544 and a movable metal mold 545.

The clamping unit 512 is described below.

The clamping unit 512 includes a fixed platen 551, a toggle support 552, a tie bar 553 built between the fixed platen 551 and the toggle support 552, a movable platen 554 that is opposite the fixed platen 551 and movable back and forth along the tie bar 553, and a toggle mechanism 556 provided between the movable platen 554 and the toggle support 552. The fixed metal mold 544 and the movable metal mold 545, opposing each other, are attached to the fixed platen 551 and the movable platen 554, respectively.

In accordance with the toggle mechanism 556, a cross head 558 moves back and forth between the toggle support 552 and the movable platen 554 by a servo motor (not shown), and consequently, the movable platen 554 moves back and forth along the tie bar 553. The movable metal mold is made contact and apart from the fixed metal mold 544 so that the metal mold is closed, clamped, and opened.

To achieve the above purpose, the toggle mechanism 556 includes a toggle lever 561 supported swingably to the cross head 558, a toggle lever 562 supported swingably to the toggle support 552, and a toggle arm 563 supported swingably to the movable platen 554. The toggle levers 561 and 562 are link-connected, and the toggle lever 562 and the toggle arm 563 are link-connected.

In addition, a ball screw shaft 564 is supported swingably to the toggle support 552, and the ball screw shaft 564 and a ball screw nut 565 fixed to the cross head 558 is engaged threadedly. A servo motor is attached on the side of the toggle support 552 for rotating the ball screw shaft 564.

According to the above arrangements, when the servo motor is activated, the rotation of the servo motor is converted into linear motion by the combination of the ball screw shaft 564 and the ball screw nut 565, that is, a screw unit 593. The linear motion is transferred to the cross head 558, and moves the cross head back and forth in the directions indicated by an arrow C. That is, if the cross head 558 is moved forward (in the right direction in FIG. 5), the toggle mechanism 556 is extended, and the movable platen 554 moves forward, which results in the closing and clamping of the metal mold. If the cross head 558 is moved backward (in the left direction in FIG. 5), the toggle mechanism 556 is bent, and the movable platen 554 moves backward, which results in the opening of the metal mold.

An ejector unit 571 is provided on the back of the movable platen 554. The ejector unit 571 has the following: an ejector pin (not shown) extending through the movable metal mold 545, the front end thereof (the right end in FIG. 5) reaching the cavity space 547; an ejector rod (not shown) provided in the rear of the ejector pin (in the left side in FIG. 5); a ball screw shaft 572 that is provided in the rear of the ejector rod and rotated by a servo motor (not shown); and a ball screw nut 573 threadedly engaged to the ball screw shaft 572.

According to the above arrangements, when the servo motor is activated, the rotation of the servo motor is converted into linear motion by the combination of the ball screw shaft 572 and the ball screw nut 573, that is, a screw unit 594. The linear motion is transferred to the ejector rod, and the ejector rod and the ejector pin moves back and forth in the directions indicated by an arrow D.

The screw units 591 through 594 used for the injection molding machine may be used in any part of the injection molding machine. Some or all of the screw units may be roller screw units or ball screw units.

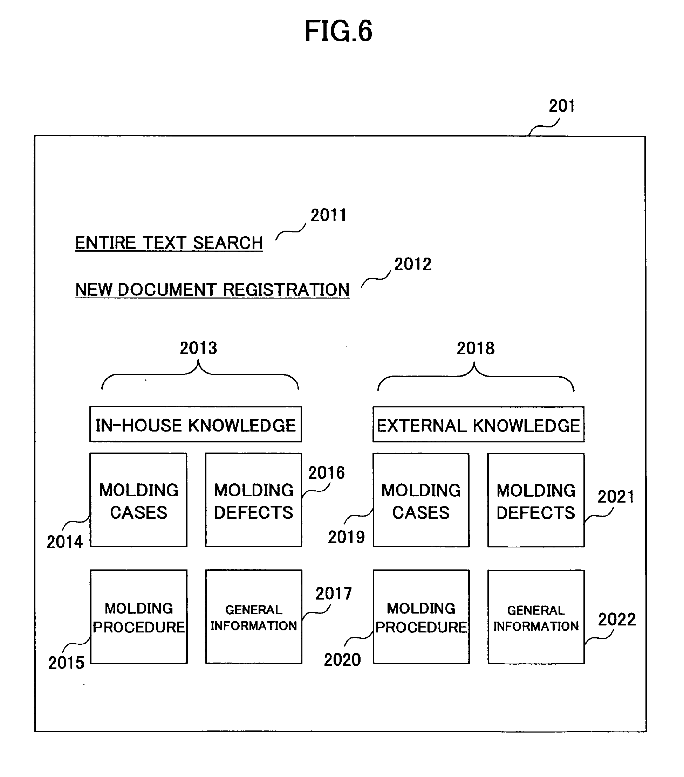

The procedure of the knowledge management system 1 shown in FIG. 2 is described below. In the case in which failure has occurred in the operation using the injection molding machine, for example, when the user using the terminal 20 requests the knowledge management system 1 to transmit the web page of the knowledge management system 1, the web page as shown in FIG. 6 is displayed in the web browser of the terminal 20.

FIG. 6 is a schematic diagram showing an exemplary web page of the knowledge management system. The web page 201 shown in FIG. 6 includes, for example, an entire text search page link 2011, a new document registration page link 2012, an in-house knowledge operation region 2013, and an external knowledge operation region 2018.

The entire text search page link 2011 is a link to an entire text search page in which search in the external knowledge database 112 and the in-house knowledge database 113 of the knowledge server 10 can be requested. The new document registration page link 2012 is a link to a new document registration page for registering cases, information, and know-how, for example, acquired by the user.

The in-house knowledge operation region 2013 is a region in which interface is provided for operating the in-house knowledge database 113, and includes a molding case button 2014, a molding procedure button 2015, a molding defect button 2016, and a general information button 2017, for example.

The molding cases button 2014 is a button for displaying a web page for searching information stored in the in-house knowledge database 113 limited to cases related to molding. The molding procedure button 2015, the molding defects button 2016, and the general information button 2017 are buttons for displaying web pages for searching information stored in the in-house knowledge database 113 related to molding procedure, molding defects, and general information, respectively.

The external knowledge operation region 2018 is a region that provides interface for operating the external knowledge database 112. The structure and function of the external knowledge operation region 2018 correspond to those of the in-house knowledge operation region 2013. The external knowledge operation region 2018 includes a molding cases button 2019, a molding procedure button 2020, a molding defects button 2021, and a general information button 2022. Each button is a button for displaying a web page for searching information stored in the external knowledge database 112 corresponding to the button.

The external knowledge database 112 stores information similar to that stored in the in-house knowledge database 113, which allows the user to use the general information obtained from the external knowledge database 112 as tips.

A description on exemplary search of information related to molding defects from the external knowledge database 112 is given below. As will be appreciated below, the knowledge system according to the present embodiment allows the user to perform entire text search of the external knowledge database 112 and the in-house knowledge database 113. If the in-house knowledge database 113 stores sufficient evaluation information and case information, the entire text search is useful. In the following description, however, the case in which the in-house knowledge database 113 has stored little evaluation and case information in the initial stage of introduction of the knowledge management system 1 is described.

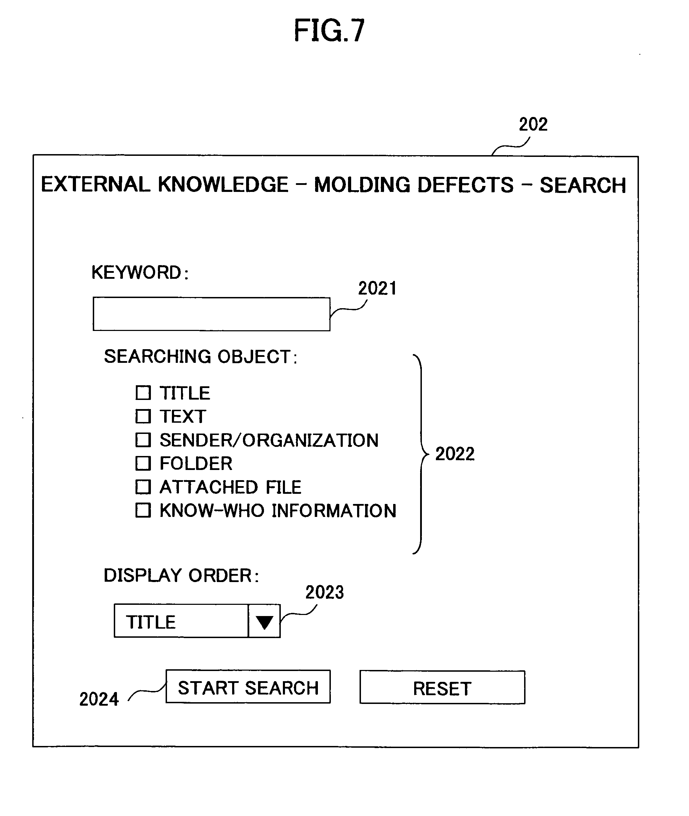

When the user clicks the molding defects button 2021 for searching information related to molding defects from the external knowledge database 112, a web page as shown in FIG. 7 is displayed on the terminal 20. FIG. 7 is a schematic diagram showing an exemplary external knowledge search page.

The in-house knowledge search page 202 includes a keyword input region 2021, a searching object designation region 2022, a display order designation combo-box 2023, and a start search button 2024. The keyword input region 2021 is a region for inputting a keyword as a search key. The searching object designation region 2022 is a region for restricting the searching object. The search order designation combo-box 2023 is a combo-box for designating the order in which search results are displayed. The start search button 2024 is a button for transmitting the search request to the knowledge server 10.

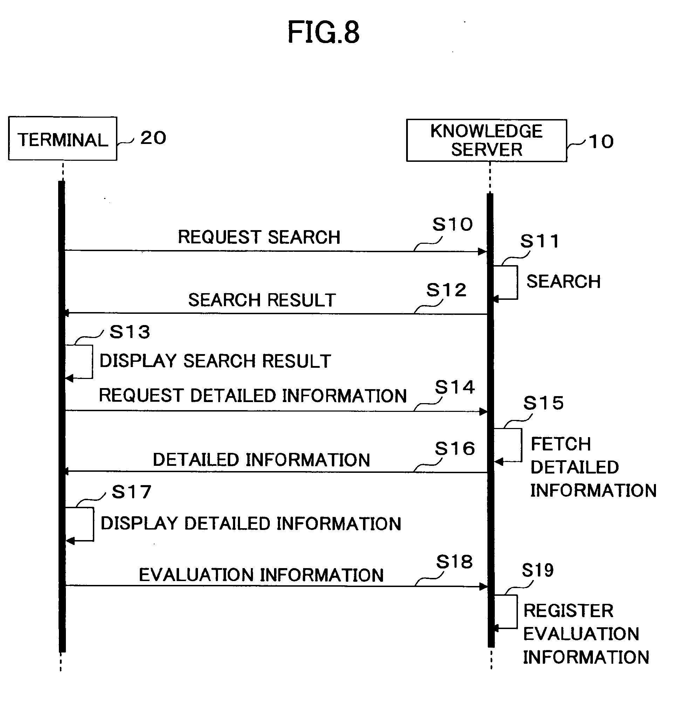

The following description refers to FIG. 8. FIG. 8 is a sequence diagram for explaining an exemplary search of external knowledge. When the user inputs a keyword, for example, in the external knowledge search page 202 displayed on the terminal 20, and clicks the start search button 2024, the terminal 20 transmits the search request requesting for the search in the external knowledge database 112 to the knowledge server 10 (S10).

For example, if cushion position which is the limit in motion of the screw in the forward direction deviates in the injection step, the deviation is referred to as a failure called "cushion change". If the screw moves forward beyond a limit at which sound items can be formed, this failure is referred to as "cushion defects". In such a case, the user can input "cushion" as the keyword and request the knowledge server 10 to search information related to "cushion".

Subsequently to step S10, in step S11, the search function unit 115 of the knowledge server 10 searches information related to molding defects matching to the condition provided from the terminal 20 from the external knowledge database 112, and generates a web page (hereinafter referred to as "search result page") for displaying the search results.

Subsequently to step S11, in step S12, when the web server program 111 of the knowledge server 10 transmits the search result page to the terminal 20, the search result page is displayed in the web browser of the terminal 20 (S13).

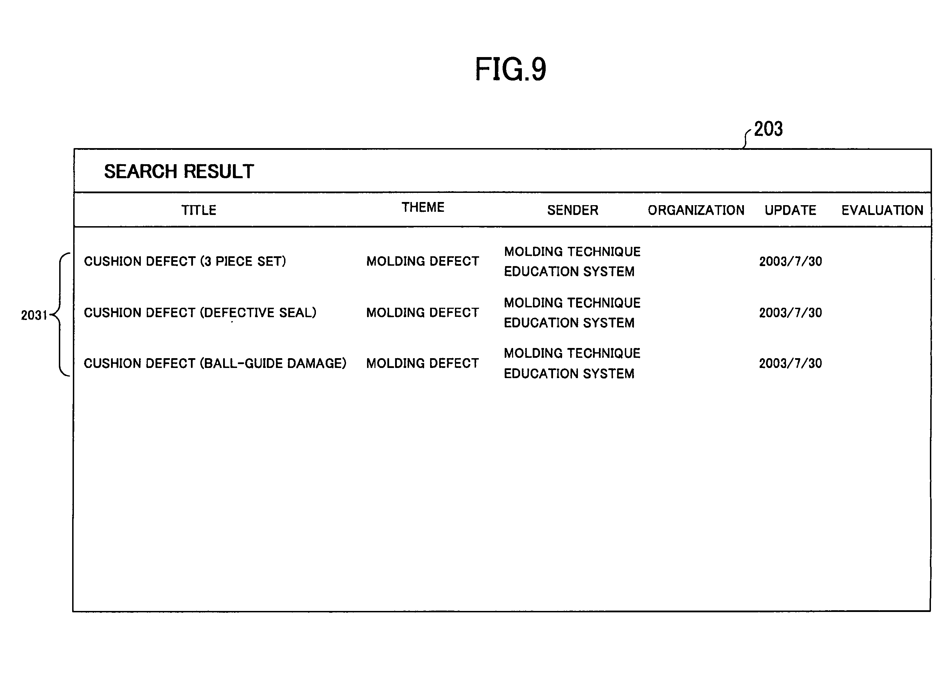

FIG. 9 is a schematic diagram showing an exemplary search result page. The search result page 203 shown in FIG. 9 includes a list 2031 of information searched from the external knowledge database 112 using the keyword "cushion". The list 2031 includes "title", "theme", "sender", "organization", "update", and "evaluation" for each item of information.

The "title" briefly indicates the contents of the information. The "theme" indicates the category of information. The "sender" indicates an individual who registered the information, and the "organization" indicates the organization to which the individual belongs. The "evaluation" is the numerical expression of evaluation on the information registered by users who accessed this item of information. Although only one item of evaluation is displayed in FIG. 9, if the information needs to be evaluated from various viewpoints, multiple items of evaluation may be displayed. The user can determine whether the item of information is helpful or not based on the above information.

If the user selects a particular item of the information in the list 2031 that the user desires to access the detailed information thereof, the terminal 20 transmits a search request for the detailed information of the selected particular item of the information to the knowledge server 10 (S14). Subsequently to step S14, in step S15, the search function unit 115 of the knowledge server 10 searches the requested detailed information from the external knowledge database 112, and generates a web page (hereinafter referred to as "detailed information page") for displaying the detailed information.

Subsequently to step S15, in step S16, when the web server program 111 of the knowledge 10 transmits the detailed information page to the terminal 20, the detailed information page is displayed on the web browser of the terminal 20 (S17).

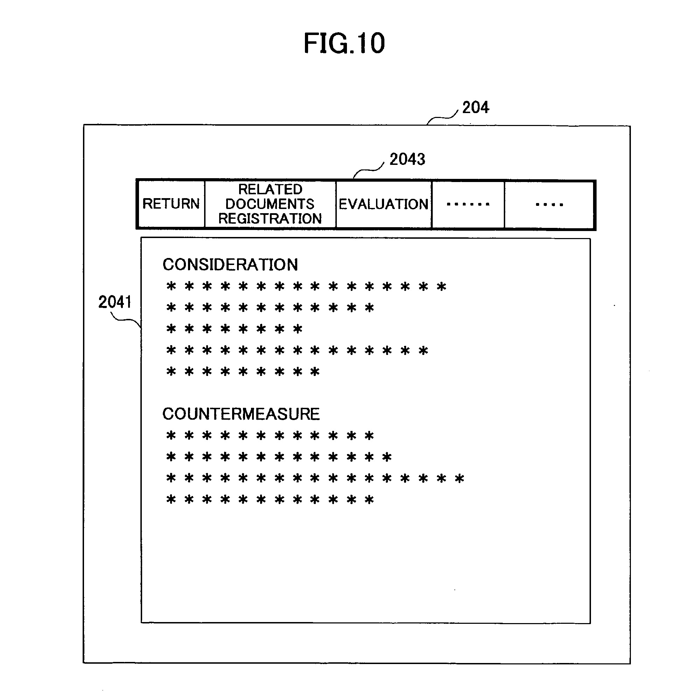

FIG. 10 is a schematic diagram showing an exemplary detailed information page. The detailed information page 204 shown in FIG. 10 includes consideration on failure and countermeasure to the failure, and procedure for confirming whether the occurrence corresponds to the failure or not, for example.

The information displayed in the detailed information page 204 is the information searched from the external knowledge database 112, that is provided from the manufacturer of the injection molding machine. As described above, the external knowledge database 112 stores information related to the damage and wear of the parts of the injection molding machines acquired by the manufacturer and information related to the countermeasure of failure of the machine. According to the above arrangements, the user can refer to the detailed information displayed in the region 2041 to access the know-how accumulated by the manufacturer. The user can use the knowledge server 10 as soon as the knowledge server 10 in which no know-how is registered is installed, which results in efficient resolution of the failure of injection molding machines and their operation.

The user can further input evaluation on the information displayed in the detailed information page 204. When the user clicks an evaluation button 2043 in the upper portion of the detailed information page 204, an evaluation information input page is displayed in the web browser of the terminal 20.

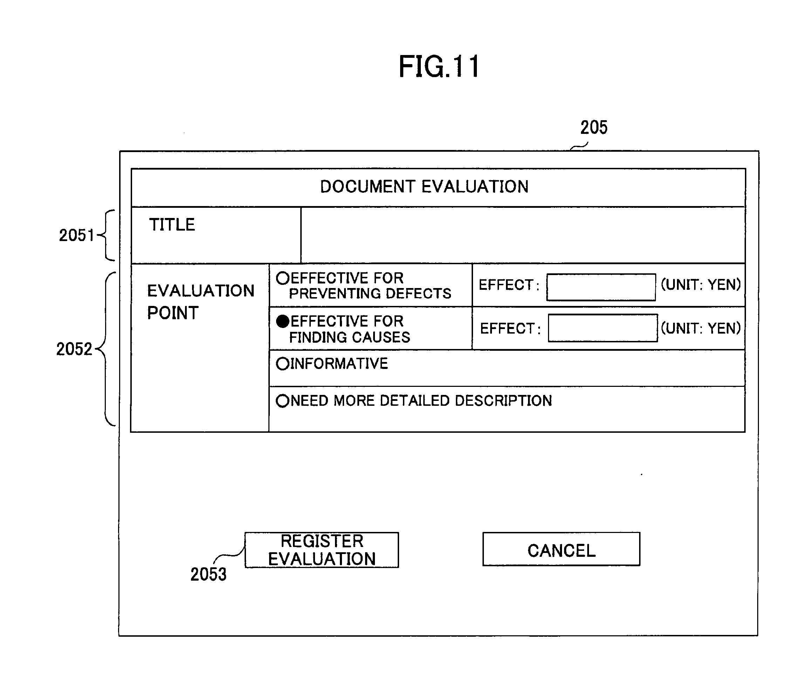

FIG. 11 is a schematic diagram showing an exemplary evaluation information input page. The evaluation information input page 205 shown in FIG. 11 includes a title display region 2051, an evaluation point input region 2052, and an evaluation registration button 2053, for example. The title display region 2051 is a region in which the title of information to be evaluated is displayed.

The evaluation point input region 2052 is a region for inputting the evaluation to information. In the case of exemplary screen shown in FIG. 11, evaluation such as "effective for preventing defects", "effective for finding causes", "informative", and "need more detailed description" can be input. When evaluations "effective for preventing defects" and "effective for finding causes" are input, resulting economical effects can be further input.

When the user inputs evaluation information and clicks the evaluation registration button 2053 in the evaluation information input page 205, the terminal 20 transmits a registration request of the evaluation information to the knowledge server 10 (step S18 of FIG. 8). In response to receipt of the registration request of the evaluation information, the evaluation function unit 119 of the knowledge server 10 registers the evaluation information transmitted from the terminal 20 in the in-house knowledge database 113, the evaluation information being associated with the information that has been evaluated. The registered evaluation information is displayed in the "evaluation" column in the search result page 203 shown in FIG. 9, for example, which allows the user to use the evaluation information to determine the value of the evaluated information.

The evaluation "effective for preventing defects", "effective for finding causes", "informative", and "need more detailed description" can be displayed using string expressions in the search result page 203. Alternatively, the evaluation may be converted into numerical expression, and the numerical expression may be displayed.

Furthermore, the user can register case information such as know-how acquired through experiences in which the user handle any failure based on the information obtained through the detailed information page 204 and know-how based on the user's own experience, for example, in the in-house knowledge database 113 through a new document registration page.

The new document registration page can be displayed on the terminal 20 by clicking a new document registration page link 2012 in the web page 201.

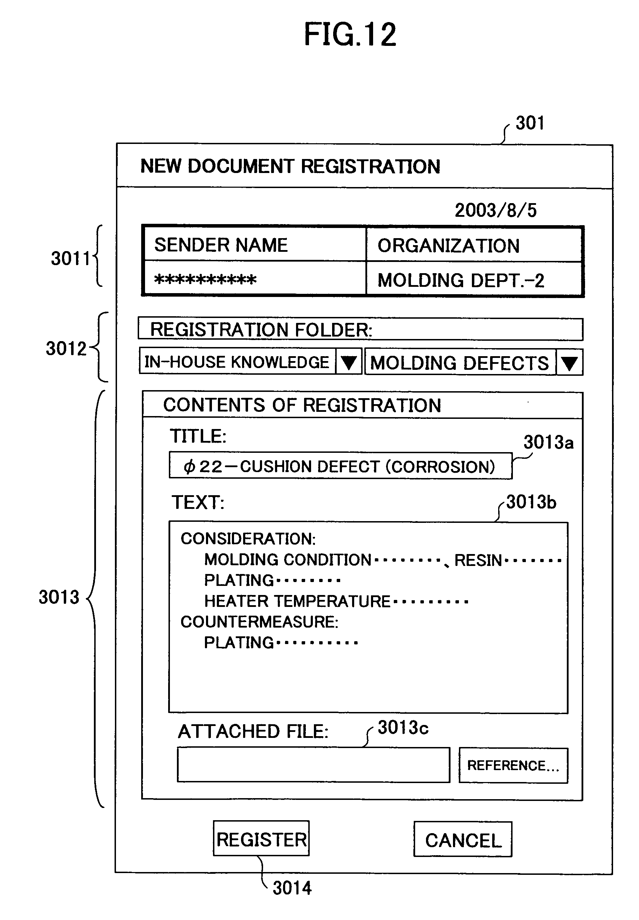

FIG. 12 is a schematic diagram showing an exemplary new document registration page. A region 3011 in the new document registration page 301 shown in FIG. 12 is a region for allowing the user to input the user's name (sender name) and the organization to which the user belongs, who registers new case information (hereinafter referred to as "new document").

A region 3012 is a region for allowing the user to designate the location to which the new document is registered. FIG. 12 shows exemplary registration of a new document in a molding defect folder of the in-house knowledge database 113.

A region 3013 is a region for allowing the user to input the contents of a new document. That is, the title of the new document can be input in a title input region 3013a, and the text of the new document can be input in a text input region 3013b. Information that is difficult to describe in text, such as image data, audio data, and moving picture data, can be registered as attached files attached to the new document by inputting their file names in a attached file designation region 3013c, the attached files being associated with the new document file.

FIG. 12 shows exemplary registration of measures adapted by the user when "cushion defect" occurs due to the corrosion of a φ22 screw. The user who has taken measures to such a failure acquires know-how such as the type of resin, the condition of molding, and the countermeasure that has resolved the failure, for example. The user can input such know-how through the new document registration page 301.

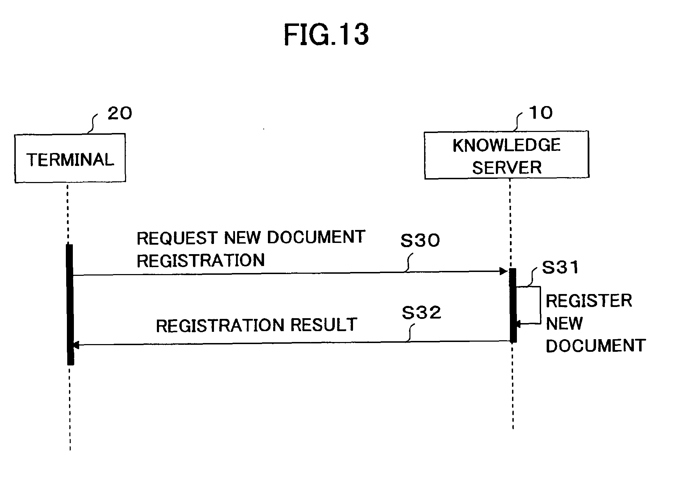

When the user inputs requisite items in the new document registration page 301, and clicks a registration button 3014, the registration of the new document is started. FIG. 13 is a sequence diagram for explaining exemplary registration of a new document.

In step S30, in response to the click made by the user on the registration button 3014, the terminal 20 transmits a registration request of a new document to the in-house knowledge database 113. If an attached file is designated in the new document registration page 301, the attached file is also transmitted to the knowledge server 10.

Subsequently to step S30, in step S31, the registration function unit 116 of the knowledge server 10 registers the new document received from the terminal 20 to the in-house knowledge database 113, and if the new document has an attached file attached thereto, further registers the attached file in the attached file database 114. Then, the registration function unit 116 generates a web page (hereinafter referred to as "registration completion notice page") to indicate the completion of the registration. The registration completion notice page is transmitted to the terminal 20 by the web server program 111 (S32). The user is informed that the registration of the new document has been normally completed through the registration completion notice page.

The case is described below in which, after the above described registration of the new document by a user, another user encounters failure related to cushion, and performs entire text search of the knowledge server 10 (search in both the external knowledge database 112 and the in-house knowledge database 113).

When the user displays the web page 201 (FIG. 6) on the terminal 20, and clicks the entire text search page link 2011 in the web page 201, an entire text search page is displayed.

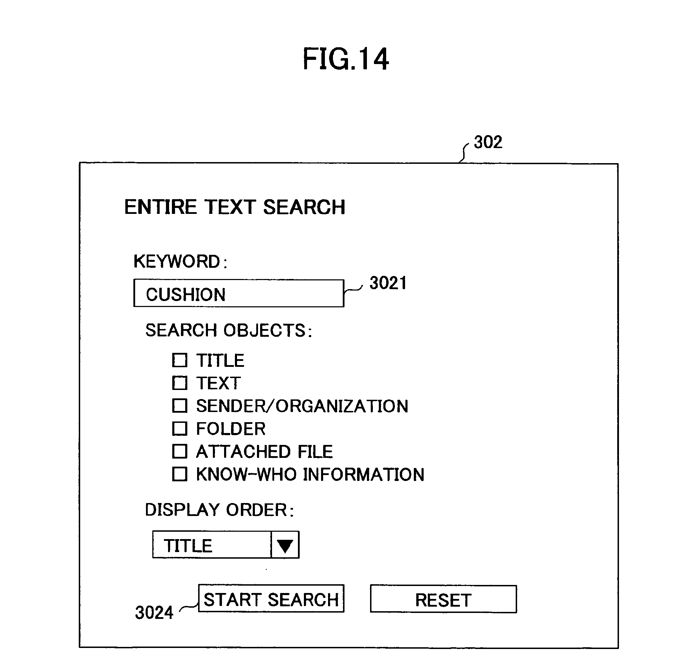

FIG. 14 is a schematic diagram showing exemplary entire text search page. The entire text search page 302 shown in FIG. 14 is similar to the external knowledge search page 202 (FIG. 7) except for the title of the page ("entire text search"), and detailed description thereof is omitted.

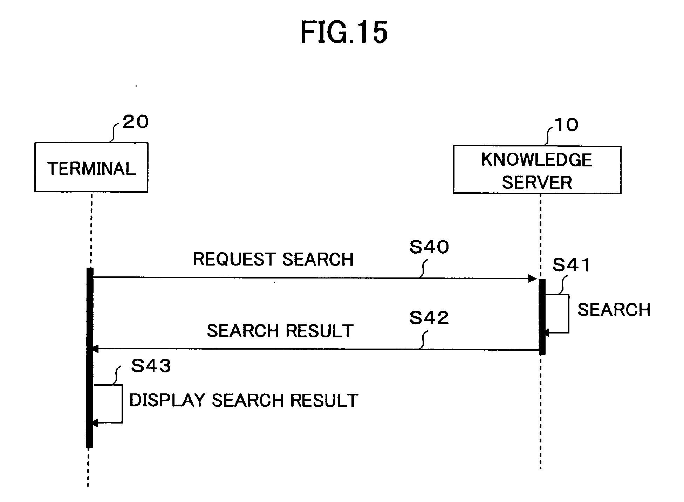

When the user input "cushion", for example, in a keyword input region 3021 of the entire text search page 302 for performing entire text search about cushion, and clicks a start search button 3024, the entire text search is started. FIG. 15 is a sequence diagram for explaining exemplary entire text search.

In step S40, in response to the click of the start search button 3024 by the user, the terminal 20 transmits a request for entire text search to the knowledge server 10.

Subsequently to step S40, in step S41, the search function unit 115 of the knowledge server 10 searches information including a keyword "cushion" requested by the terminal 20 from the external knowledge database 112 and the in-house knowledge server 113, and generates an entire text search result page for displaying search results.

Subsequently to step S41, in step S42, the web server program 111 of the knowledge server 10 transmits the search result page to the terminal 20, and the terminal 20 displays the entire text search result page in the web browser (S43).

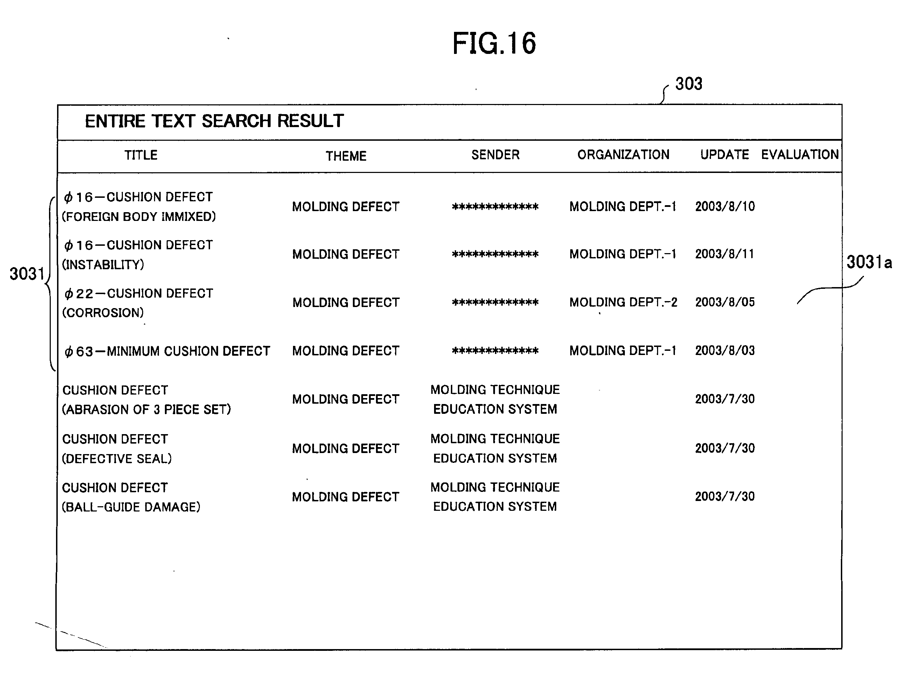

FIG. 16 is a schematic diagram showing an exemplary entire text search result page. The search result page 303 shown in FIG. 16 shows search results using "cushion" as a keyword similarly to the search result page 203 (FIG. 9). Search results from not only the external knowledge database 112 but also the in-house knowledge database 113 is shown together in the entire text search result page 303. That is, records denoted by reference numeral 3031 that are not displayed in the search page 203 are case information that are searched from the in-house knowledge database 113 and acquired and registered by the user. For example, a record 3031a titled "φ22-cushion defect (corrosion)" is a record corresponding to information registered as a new document as described with reference to FIG. 13.

The detailed information of the searched information can be accessed based on the entire text search result page 303, and evaluation information on the information can be registered, in the same manner as the search in the external knowledge database 112. According to the above arrangements, when the user selects a record 3031a, the detailed information page 204 is displayed on the terminal 20, in which information input through the new document registration page 301 is displayed.

As described above, the knowledge management system 1 according to the present embodiment allows the user to use know-how based on professional and high quality knowledge accumulated by the manufacture of injection molding machines, and to efficiently resolve problems related to operation related to the injection molding machines and techniques associated with the injection molding machines, which results in the improvement in efficiency of operation.

In addition, the knowledge server 10 can manage evaluation information on information provided therefrom, and the user can efficiently find high quality information from a lot of registered information based on the evaluation information.

In addition, the knowledge server 10 can manage case information acquired by the user in practical operation in the same manner as the know-how provided by the manufacturer. When encountering failure, the user can quickly access more concrete information of similar failure, which allows the user to adapt appropriate measures to the failure.

If the knowledge server 10 is connected with terminals located in multiple factories through a network such as the Internet and a leased channel, the information managed by the knowledge server 10 can be not only used by a single molding site but also shared by the multiple factories.

The manufacturer of molding machines may sell their own know-how as new business.

Preferred embodiments of the present invention are described above in detail. The present invention is not limited to the specifically disclosed embodiments, and variations and modifications may be made without departing from the scope of the present invention.

## Claims

1. An information management apparatus for managing information related to a predefined device, comprising:
a basic information database configured to store basic information related to the device accumulated by the manufacturer of the device; and
a user information database configured to store case information related to the device obtained by the user of the device.

2. The information management apparatus as claimed in claim 1,
wherein
said user information database is further configured to store evaluation information of the basic information, the evaluation information obtained by the user.

3. The information management apparatus as claimed in claim 2,
wherein
said user information database is further configured to store evaluation information of the case information.

4. The information management apparatus as claimed in one of claims 1 through 3, further comprising:
an information retrieval unit configured to retrieve, based on a request from a terminal connected to the information management apparatus via a network, information related to the request from said basic information database and said user information database,
wherein
the information management apparatus transmits the information retrieved by said information retrieved by said information retrieval unit to the terminal.

5. The information management apparatus as claimed in one of claims 1 through 4, further comprising:
an evaluation information registration unit configured to register the evaluation information transmitted from the terminal to said user information database.

6. The information management apparatus as claimed in one of claims 1 through 5, further comprising:
a case information registration unit configured to register the case information transmitted from the terminal to the user information database.

7. The information management apparatus as claimed in one of claims 1 through 6,
wherein
said basic information database prohibits the basic information from being changed.

8. The information management apparatus as claimed in one of claims 1 through 7,
wherein
the basic information is know-how accumulated by the manufacturer of the device.

9. The information management apparatus as claimed in one of claims 1 through 8,
wherein
the basic information includes at least one of information related to troubles of the device, case information related to the device, and information related to operational procedure of the device.

10. The information management apparatus as claimed in one of claims 1 through 9,
wherein
the device is an injection molding machine; and
said basic information database accumulates a method of solving at least one of "cushion defect", "cycle anomaly", "filling peak pressure anomaly", "motor temperature anomaly", and "ball screw temperature anomaly".

11. An information management system comprising an information management apparatus for managing information related to a predefined device, and a terminal connected to the information management apparatus via a network,
wherein
said information management apparatus comprises:
a basic information database configured to store basic information related to the device accumulated by the manufacturer of the device;
a user information database configured to store case information related to the device obtained by the user of the device, and
said information management transmits, based on a request from the terminal, basic information retrieved from said basic information database to the terminal, and registers, based on the basic information, evaluation information of the basic information transmitted by the terminal to said user information database.

12. An information management system comprising an information management apparatus for managing information related to a predefined device, and a terminal connected to the information management apparatus via a network,
wherein
said information management apparatus comprises:
a basic information database configured to store basic information related to the device accumulated by the manufacturer of the device; and
a user information database configured to store case information related to the device obtained by the user of the device,
said information management transmits retrieval result to the terminal retrieved from at least one of said basic information database and said user information database based on a request from the terminal, and
the terminal comprises a display unit for displaying information received from the information management apparatus.

13. An information management program that causes an information management apparatus comprising a basic information database configured to store basic information related to a device accumulated by the manufacturer of the device, and a user information database configured to store evaluation information of the basic information given by a user of the device, to perform the steps of:
transmitting basic information retrieved from the basic information database based on a request from the terminal connected via a network to the terminal; and
registering evaluation information of the basic information transmitted from the terminal based on the transmitted basic information to the user information database.

14. An information management program that causes an information management apparatus comprising a basic information database configured to store basic information related to a device accumulated by the manufacturer of the device, and a user information database configured to store case information related to the device obtained by the user of the device, to perform the steps of:
registering case information related to the device obtained by the user, transmitted from the terminal, to the user information database.

15. The information management program claimed in either claim 13 or 14, further comprising the step of:
transmitting information retrieved from the basic information database and the user information database based on the request from the terminal.

16. A computer readable recording medium storing the information management program as claimed in one of claims 13 through 15.
